# EUROPEAN PATENT APPLICATION

(11) **EP 0 532 171 A1**
(43) Date of publication of application: **17.03.1993**
(21) Application number: 92307095.7
(22) Date of filing: 04.08.1992
(51) Int. Cl.: C08L 25/02, C08L 33/04, C08L 53/02, C08L 33/06

(54) **Sterilized articles**

(30) Priority: 12.09.1991 US 757922
(71) Applicant: NOVACOR CHEMICALS (INTERNATIONAL) S.A., Fribourg, Canton of Fribourg (CH)
(72) Inventor: Hauser, Deborah I., Lowell, Mass., 01851 (US); Colella, Michael B., Plantsville, CT., 06479 (US); Blasius, Willian George, Jr., Charlton, Mass., 01507 (US); Haines, James M., West Boylston, Mass., 01583 (US)
(74) Representative: Jukes, Herbert Lewis

(57) **Abstract**

Articles made from a polymer alloy of a clear brittle styrenic acrylate, a rubbery block styrene-diene copolymer and a ductile styrene-diene polymer may be sterilized without significant loss of physical properties or increase in yellowness index.

## Description

The present invention relates to clear articles which may be sterilized by gamma radiation. Upon sterilization such article retains at least 80% of its tensile elongation and does not develop a change in yellowness index greater than 5.

There are a number of applications where clear sterile devices are required. These range from the mundane, such as urine sample bottles to the more exotic such as elements used in satellites and space probes where it is important not to contaminate samples or even in research applications where a material may be subject to gamma radiation and should retain its clarity. Currently there is a trend to sterilize cosmetics in their containers such as compacts and the like.

While there are a number of plastic materials which meet the original clarity standard for such devices, the polymers generally suffer from low impact properties, or if they have the required mechanical properties, on sterilization they loose the mechanical properties or develop a yellowness (sometimes referred to as the yellowness index).

In concurrent research Novacor Chemicals Inc. has evaluated a number of its polymers for such applications including a newly developed polymer alloy which has outstanding toughness. There was nothing in the program which indicated that the alloys would have superior retention of tensile elongation when subjected to sterilization, and particularly sterilization by gamma radiation.

The above noted newly developed polymer alloy is the subject matter of United States patent application serial number 654,058 filed February 12, 1991.

The only reference which applicants have been able to locate which refers to the term sterilization and also refers to acrylic polymers is United States patent 4,737,556 entitled "Non-Hydrous Soft Contact Lens and Process for Producing the Same issued April 12, 1988, assigned to Japan Synthetic Rubber Company Ltd. The case is of interest in that it refers to the sterilization of contact lens made from fluoro alkyl acrylic esters. The case does not suggest the type of alloys of the present invention nor does it discuss gamma radiation as a sterilization agent.

The following is a list of references which applicants feel may be relevant to the composition of the new polymer alloy of the present invention.

Chemical Abstracts 109:**171278v** [*Polym. Prepr. (Am. Chem. Soc., Div. Polym. Chem.)* **1988**, 29(2), 180-1] discloses that physical blends of block SBR (styrene content: 75.2 weight percent) and a copolymer of methyl methacrylate and styrene are partially compatible. The morphological and mechanical properties of the blend are strongly dependent on the molding/mixing process used to produce the blend. The SBR could only be toughened when the ideal morphology of the blend was obtained.

Chemical Abstracts 106:**85901z** [JP 61/200,151] discloses thermoplastic compositions comprising from 5 to 95 weight percent of a block copolymer and from 95 to 5 weight percent of a thermoplastic polymer (e.g. ABS). The block copolymer is derived from coupling an aromatic vinyl polymer block with an aromatic vinyl monomer-conjugated diene copolymer block. The subject thermoplastic compositions apparently have improved impact strength.

Chemical Abstracts 112:**8285y** [JP 61/291,610] discloses the use of "impact modifiers" for thermoplastic polymers. The modifiers are basically similar to the block copolymer disclosed by Chemical Abstracts 106:**85901z**.

Chemical Abstracts 99:**196070j** [JP 58/122,954] discloses improvement of anisotropy of a styrene hydrocarbon-conjugated diene block copolymer by blending it with a styrene-methacrylic ester copolymer. Such a blend, when extruded to form a molded plate, apparently possesses superior physical properties.

Chemical Abstracts 111:**8522c** [JP 01/45614] discloses high-impact styrene polymer compositions comprises a major amount of a styrene (50 to 90 weight percent)-conjugated diene (50 to 10 weight percent) block copolymer and a minor amount of a styrene-based polymer (e.g. styrene-methyl methacrylate copolymer).

It would be desirable to have a composition which possesses a combination of improved properties, including improved impact strength. The alloys of the present invention may have a notched Izod impact strength of greater than about 0.5, preferably greater than 1.0 ft.lb./in. In a particularly preferred aspect of the present invention, the alloys may have a haze of less than 10, most preferably less than 5. It is also desirable to have such polymers which retain at least 80, more preferably 85% of their flexural, tensile, and Izod impact properties and which do not significantly yellow on sterilization.

It is an object of the present invention to provide a transparent sterilized device.

Accordingly, in one of its aspects, the present invention provides a transparent article characterised by having been made from a thermoplastic material which upon exposure to up to 5 MRADS of gamma radiation, retains at least 80% of its tensile elongation and does not develop a change in yellowness index greater than 5, said thermoplastic comprising a polymer alloy comprising:
(i) from 30 to 82 weight percent of a brittle polymer;
(ii) from 3 to 50 weight percent of a rubbery polymer; and
(iii) from 15 to 67 weight percent of a ductile polymer provided that the ductile polymer and the rubbery polymer are at least compatible.

As used in this specification:
**"brittle"** means a polymer having an elongation at break up to 15 percent, preferably less than 10 percent, as measured by ASTM D-638;
**"ductile"** means a polymer having an elongation at break greater that 15 percent, as measured by ASTM D-638;
**"rubbery"** means a natural or synthetic polymer which, at room temperature can be stretched to at least twice its original length, and upon immediate release of the stress, will return to approximate original length;
**"compatible"** means two or more polymers which have good interfacial adhesion (for example a blend of the polymers exhibits physical properties approximate those expected from the rule of mixtures);
**"miscible"** means two or more polymers which, when blended, remains clear, especially if the refractive indices of the polymers do not match; and
**"article"** or **"articles"** means devices and packaging for devices such as medical devices which are transparent or contain transparent parts for example, a medical urine meter or collector, or bacterial identification or culture devices such as tubes or dishes and medical assay devices or tubes used to identify the presence of specific antibodies in a sample , usually of blood or plasma, or containers for make-up such as compacts or lipstick containers, and clear packaging for sterilized devices such as blister or bubble type packaging.

The articles of the present invention may be sterilized by subjecting them to up to 5 MRADS of gamma radiation.

Polymer alloys in accordance with the present invention may have mechanical properties within the following ranges:
(a) Haze - less than 10%;
(b) Izod Impact (ft.lb./in.) - 0.4 or greater;
(c) Tensile Yield (psi) - greater than 3000;
(d) Flexural Modulus (kpsi) - greater than 200 (e.g. 200,000 psi); and
(e) Tensile Elongation - of greater than 20%.

After sterilization the products of the present invention may retain at least 80, more preferably at least 90% of the tensile elongation properties. Interestingly, the products do not significantly yellow on sterilization. The change in yellowness index is less than 10, more preferably less than about 8, most preferably less than 5.

In the present invention the device or article prepared from the polymer alloy may also be sterilized using a sterilizing agent comprising from 10 to 100% ethylene oxide and from 0 to 90% of a diluent. Preferably the diluent is a halocarbon such as FREON® (trademark of DuPont for chloroflourocarbons). The article may retain at least 80 more preferably 85% of its tensile strength, flexural modulus and izod impact properties while also retaining at least 80, preferably more than 90% of its tensile elongation and maintaining a change in yellow index of less than 5.

The brittle polymer used in the polymer alloy may be selected from polymers comprising:
(i) from 90 to 30, preferably from 80 to 40, most preferably from 75 to 55, weight percent of one or more C₈₋₁₂ vinyl aromatic monomers which are unsubstituted or substituted by a C₁₋₄ alkyl radical;
(ii) from 10 to 70, preferably from 20 to 60, most preferably from 25 to 45, weight percent of one or more C₁₋₆ alkyl esters of C₃₋₆ ethylenically unsaturated carboxylic acids; and
(iii) from 0 to 5, preferably from 0 to 3, weight percent of one or more C₃₋₆ ethylenically unsaturated carboxylic acids.

C₈₋₁₂ vinyl aromatic monomer for use in the polymer alloy is not restricted and may be unsubstituted or substituted by a C₁₋₄ alkyl radical. Preferably, the C₈₋₁₂ vinyl aromatic monomer is selected from styrene, α-methyl styrene, p-methyl styrene and t-butyl styrene. The preferred C₈-C₁₂ vinyl aromatic monomer is styrene.

The choice of C₁₋₄ alkyl ester of a C₃₋₆ ethyenically unsaturated carboxylic acid for use in producing the brittle polymer is not restricted. Non-limiting examples of suitable esters are methyl acrylate, ethyl acrylate, methyl methacrylate, ethyl methacrylate, butyl acrylate and butyl methacrylate. The preferred ester is methyl methacrylate.

A brittle styrene acrylate polymer for use in the present polymer alloys may be a copolymer of styrene and methyl methacrylate. Preferably, such a copolymer comprises from 75 to 65 weight percent styrene and from 25 to 35 weight percent methyl methacrylate. Such a polymer is commercially available from Novacor Chemicals Inc. under the trademark NAS 30®.

The production of a brittle polymer suitable for use in the polymer alloy is within the purview of a person skilled in the art. Such polymers may be produced by suspension, solution, emulsion, or bulk polymerization.

Preferably the brittle polymer is used in an amount from 35 to 75; most preferably from 40 to 70 weight percent of the alloy.

The ductile polymer used in the polymer alloy may be derived from 60 to 90, preferably from 70 to 80, weight percent of at least one C₈₋₁₂ vinyl aromatic monomer, and 40 to 10, preferably from 30 to 20, weight percent of at least one C₄₋₆ conjugated diolefin.

A ductile polymer for use in the polymer alloy may be a linear or radial di-block (vinyl aromatic monomer-conjugated diene) or tri-block (vinyl aromatic monomer-conjugated diene-vinyl aromatic monomer) copolymer. The production of such copolymers is known to those skilled in the art. Such polymers can be produced by living solution polymerization (e.g. using a lithium catalyst).

A rubbery polymer for use in the polymer alloy may be derived from 30 to 70, preferably from 40 to 55, weight percent of at least one C₈₋₁₂ vinyl aromatic monomer, and 70 to 30, preferably from 60 to 55, weight percent of at least C₄₋₆ conjugated diolefin.

A rubbery polymer for use in the polymer alloy may be a linear, tapered, or radial di-block (aromatic vinyl block-conjugated diene block) or a tri-block copolymer (vinyl aromatic block-conjugated diene block-vinyl aromatic block). As is known in the art, a tapered di-block copolymer may be a copolymer comprising a block which becomes progressively rich in one of the constituent monomers in a segment (typically, the end) of the block.

The process by which such a tapered copolymer is obtained is similar to the process by which block copolymers are obtained except that there is an incremental adjustment in the monomer feed (e.g. richer or poorer in vinyl aromatic/conjugate diolefin) to produce a block polymer which is "tapered".

C₈₋₁₂ vinyl aromatic monomers for use in the ductile polymer and the rubbery polymers of the polymer alloy are not restricted and may be unsubstituted or substituted by a C₁₋₄ alkyl radical. Preferably, the C₈₋₁₂ vinyl aromatic monomer is selected from styrene, α-methyl styrene, p-methyl styrene and t-butyl styrene. A preferred C₈₋₁₂ vinyl aromatic monomer is styrene. A ductile polymer may contain a larger amount of vinyl aromatic monomer, e.g. in the range from 70 to 80 weight percent; and the rubbery polymer may contain lower amounts of vinyl aromatic monomer, e.g. in the range 40 to 50 weight percent.

C₄₋₆ conjugated diolefin in the ductile polymer and the rubbery polymer of the polymer alloy is not restricted and may be unsubstituted or substituted by a chlorine atom. Preferably, the C₄₋₆ conjugated diolefin is selected from 1,3-butadiene and isoprene.

The rubbery and ductile polymers in the polymer alloy should at least be compatible. Preferably, the polymers will be miscible (as defined in the present application).

The polymer alloy of the present invention may comprise from 3 to 50, preferably from 5 to 30, weight percent of the rubbery polymer; from 27 to 67, preferably from 25 to 65 weight percent of the ductile polymer. The brittle polymer may be present in an amount from 30 to 70 weight percent. It should be kept in mind that the ductile and rubbery polymers are at least compatible. At relatively low amounts of brittle polymer, from 30 to 55, preferably from 30 to 45, weight percent, the brittle polymer may form a discontinuous phase distributed within the matrix of rubbery and ductile polymer. At relatively higher amounts of brittle polymer, from 45 to 90, preferably from 55 to 90, weight percent, the ductile and rubbery polymer may form a discontinuous phase distributed throughout the brittle matrix. In the range of from 45 to 55 weight percent of the brittle polymer, the continuous phase is not merely determined by the relative amount of brittle polymer but will also depend on the difference in melt viscosities between the brittle phase and the rubbery and ductile phases.

The rubbery and ductile phases are at least compatible. That is, these components of the alloy will have good interfacial adhesion. Under stress they will not delaminate. Preferably, the rubbery and ductile components are miscible. That is, when blended they will form a clear component, whether or not their refractive indices are matched or close.

For the present invention, in the polymer alloy the refractive index of the brittle polymer may be matched to the refractive index of the blend of the ductile and rubbery polymers. If the refractive indices of the brittle polymer and a blend of the ductile and rubbery polymers match to within ±0.01, the alloy will have a low haze, preferably less than 10. If the refractive indices of the brittle polymer and a blend of the rubbery and ductile polymers matches to within ±0.005, then the alloys will have extremely low haze.

In view of the above, the refractive index of the brittle polymer may be selected to try to minimize haze. By blending the ductile and rubbery components in the desired, or required, ratio, the refractive index of the resulting material may be measured if the rubbery and ductile polymers are miscible. Then, the composition of the brittle polymer may be estimated using the formula set forth in the Polymer Handbook, 2nd Ed. John Wiley and Sons Inc. and the refractive indices of the monomers. In this manner, it may be possible to match indices of refraction and obtain extremely clear and tough alloys.

The above is not intended to place any limitation on the order of mixing the polymers. It is not necessary to have a specific sequenced addition of polymers to the extruder.

In the preparing the present polymer alloys, solution blending of the constituents is generally not useful as it is difficult to find a common solvent for each polymer in the blend. Adequate mixing of the components can be achieved by mechanical mixing in a suitable intensive mixer, preferably an extruder. Operation of an extruder to achieve this end is within the purview of a person skilled in the art. For example, for an inch and a half extruder having an L to D ratio of about 24:1, the extruder is operated at from 30 to 150, preferably from 50 to 135, most preferably from 75 to 100, RPM. During such operation, the barrel temperature of the extruder may be in the range of from 190° to 240°C, preferably from 200° to 220°C.

In the preparation of the polymer alloy the ductile and rubbery polymers may be extruded and chopped into pellets. The resulting pellets may then be extruded with the brittle polymer. However, the components of the alloys of the present invention may be or may also be dry blended in, for example, a tumble blender. The resulting blend may then be extruded. In an alternative procedure, the polymers may be fed directly to an extruder which provides good mixing.

Embodiments of the invention will be illustrated with reference to the following Examples which should not be construed so as to limit the scope of the present invention.

### EXAMPLE 1

Commercially available samples of alloys of brittle polymer, ductile polymer, and rubbery polymer available from Novacor Chemicals Inc. under the trademark ZYLAR® having the grade designations:
(a) ST 94-568;
(b) ST 94-560;
(c) ST 94-561; and
(d) ST 94-562
were molded into test pieces and the test pieces were tested.

The ZYLAR alloys come within the composition ranges specified in the specification. The components used in the blends are as follows.

### COMPONENT

- Brittle polymer -: A copolymer derived from styrene (70 weight percent) and methyl methacrylate (30 weight percent), available from Novacor Chemicals Inc. as NAS 30® (trademark).
- Ductile polymer -: A block copolymer derived from styrene (75 weight percent) and butadiene (25 weight percent).
- Rubbery polymer -: A tapered polymer derived from styrene (43 weight percent) and butadiene (57 weight percent).

It should be noted that no specific gamma radiation stabilizers were incorporated into the ZYLAR polymer alloys.

For comparison purposes a Gamma Grade of PVC (PVC(G), PETG (sold under the trademark KODAR PETG 6763®, a polycarbonate (PC), and a gamma grade of polycarbonate (PC(G)) were also molded into test samples. The gamma grades of the above polymers all contain specific stabilizers to reduce the increase in yellowness on sterilization.

The samples were exposed to 1, 3, and 5 MRADS of gamma radiation and the change in yellowness index and the percent retention of tensile elongation were measured. The results are set forth in Table 1.

**Table 1**

| Sample | Change in Yellowness Index | | | % Retained Tensile Elongation | | |
|---|---|---|---|---|---|---|
| | 1 MRAD S | 3 MRAD S | 5 MRAD S | 1 MRAD S | 3 MRAD S | 5 MRA DS |
| ZYLAR ST 94-568 | 0.1 | 0.6 | 1.5 | 100 | 100 | 92 |
| ZYLAR ST 94-560 | 0.2 | 0.2 | 1.6 | 89 | 95 | 84 |
| ZYLAR ST 94-561 | 0.4 | 0.8 | 1.3 | 99 | 100 | 100 |
| ZYLAR ST 94-562 | 0.4 | 0.8 | 1.3 | 100 | 100 | 100 |
| PVC(G) | 8.0 | 15.0 | 28.9 | 60 | 58 | 37 |
| PETG | 2.4 | 8.8 | 12.1 | 100 | 94 | 42 |
| PC | 10.5 | 29.7 | 49.4 | 100 | 96 | 100 |
| PC(G) | 7.1 | 17.1 | 30.3 | 100 | 94 | 100 |

The above table shows that the polymer alloys of the present invention exhibit both a significantly lower yellowing and retain more of their tensile elongation properties that those of other polymers which might be used in the applications contemplated by the present invention.

### EXAMPLE 2

The above ZYLAR products were exposed to 1, 3, and 5 MRADS of gamma radiation and were tested to determine their percent retained tensile strength, percent retained flexural modulus and their percent retained Izod Impact strength. The results of these tests are shown in Tables 1, 2, and 3. The results given in the accompanying tables, show an excellent retention of properties on exposure to gamma radiation. Percent Retained Tensile Strength (Table 2).

**Table 2**

| Sample | Exposure MRADS 1 | Exposure MRADS 3 | Exposure MRADS 5 |
|---|---|---|---|
| ZYLAR ST 94-568 | 100.6 | 101.7 | 102.9 |
| ZYLAR ST 94-560 | 101.1 | 102.4 | 103.3 |
| ZYLAR ST 94-561 | 99.8 | 101.0 | 101.4 |
| ZYLAR ST 94-562 | 100.2 | 99.2 | 100.0 |
| Percent Retained Flexural Modulus (Table 3). | | | |

**Table 3**

| Sample | Exposure MRADS 1 | Exposure MRADS 3 | Exposure MRADS 5 |
|---|---|---|---|
| ZYLAR ST 94-568 | 98.5 | 108.6 | 103.8 |
| ZYLAR ST 94-560 | 98.8 | 104.6 | 106.8 |
| ZYLAR ST 94-561 | 98.4 | 93.0 | 111.2 |
| ZYLAR ST 94-562 | 102.6 | 103.9 | 112.2 |
| Percent Retained Izod Impact Strength (Table 4). | | | |

**Table 4**

| Sample | Exposure MRADS 1 | Exposure MRADS 3 | Exposure MRADS 5 |
|---|---|---|---|
| ZYLAR ST 94-568 | 95.6 | 98.5 | 95.6 |
| ZYLAR ST 94-560 | 92.8 | 92.8 | 86.3 |
| ZYLAR ST 94-561 | 104.6 | 93.8 | 100.0 |
| ZYLAR ST 94-562 | 98.7 | 96.9 | 95.2 |

### EXAMPLE 3

The results from Example 2 were so promising that the same samples were sterilized using either ethylene oxide or a mixture of ethylene oxide and FREON (12:88). The same tests were repeated. The percent retained tensile strength is shown in Table 5. The percent retained flexural modulus is shown in Table 6. The percent retained Izod Impact strength is shown in Table 7. These tables demonstrate that upon sterilization with ethylene oxide or a blend of ethylene oxide and FREON the polymer alloy properties were substantially maintained. Percent Retained Tensile Strength (Table 5).

**Table 5**

| Sample | Ethylene Oxide | Ethylene Oxide FREON |
|---|---|---|
| ZYLAR ST 94-568 | 100.3 | 98.7 |
| ZYLAR ST 94-560 | 100.4 | 99.9 |
| ZYLAR ST 94-561 | 95.4 | 94.8 |
| ZYLAR ST 94-562 | 100.0 | 98.9 |
| Percent Retained Flexural Modulus (Table 6). | | |

**Table 6**

| Sample | Ethylene Oxide | Ethylene Oxide FREON |
|---|---|---|
| ZYLAR ST 94-568 | 102.8 | 102.3 |
| ZYLAR ST 94-560 | 99.4 | 102.8 |
| ZYLAR ST 94-561 | 114.4 | 117.9 |
| ZYLAR ST 94-562 | 115.3 | 114.0 |
| Percent Retained Izod Impact Strength (Table 7). | | |

**Table 7**

| Sample | Ethylene Oxide | Ethylene Oxide FREON |
|---|---|---|
| ZYLAR ST 94-568 | 123.8 | 104.8 |
| ZYLAR ST 94-560 | 100.0 | 100.0 |
| ZYLAR ST 94-561 | 108.8 | 114.0 |
| ZYLAR ST 94-562 | 89.6 | 96.9 |

### EXAMPLE 4

To test the sensitivity of the samples to solvent samples of the above ZYLAR products and a sample of an impact modified acrylic polymer (G-20 from Cyro Industries) and a sample of a clear ABS polymer (CTB from General Electric) were exposed to isopropanol for one hour and then tested for tensile properties at 0.9% strain. The isopropanol was chosen as it is commonly used as a surface antiseptic in hospitals and in the manufacture of medical devices. The results are shown in Table 8. While there is a moderate loss of properties it is less than the severe loss of properties in the comparative materials.

**Table 8**

| Sample | % Retention of Tensile Strength |
|---|---|
| ZYLAR ST 94-568 | 96 |
| ZYLAR ST 94-560 | 98 |
| ZYLAR ST 94-561 | 93 |
| ZYLAR ST 94-562 | 95 |
| Clear ABS | 25 |
| Impact Acrylic | 0* |

| | |
|---|---|
| * Failed on test fixture. | |

### COMPARATIVE DATA

The retained properties of the ZYLAR products are impressive. However, the real significance of the present invention if more fully demonstrated by the excellent properties of the ZYLAR ST products before sterilization. For comparative purposes the properties of unsterilized ZYLAR ST are set forth below.

**Table 9**

| Property | ZYLAR ST 94-568 | ZYLAR ST 94-560 | ZYLAR ST 94-561 | ZYLAR ST 94-562 |
|---|---|---|---|---|
| Haze (%) | 2.8 | 3.1 | 3.0 | 2.9 |
| Tensile Strength (psi) | 6151 | 4420 | 3735 | 3145 |
| Flexural Modulus (PSI x 1000) | 394 | 322 | 257 | 229 |
| Izod (ft.lb./inc.) | 0.68 | 4.01 | 6.30 | 9.38 |

In the present application's disclosure of the present invention, any numerical value includes the precise value and any value "about" or "essentially" or "substantially" the same as the precise value. The wording of the appended claims and abstract is incorporated into the present description.

## Claims

1. A transparent article characterised by having been made from a thermoplastic material which upon exposure to up to 5 MRADS of gamma radiation, retains at least 80% of its tensile elongation and does not develop a change in yellowness index greater than 5 said thermoplastic comprising a polymer alloy comprising:
(i) from 30 to 82 weight percent of a brittle polymer;
(ii) from 3 to 50 weight percent of a rubbery polymer; and
(iii) from 15 to 67 weight percent of a ductile polymer provided that the ductile polymer and the rubbery polymer are at least compatible.

2. The article according to claim 1, characterised by that when subjected to 5 MRADS of radiation or a sterilizing agent comprising 10-100 weight percent of ethylene oxide and 0 to 90% of a diluent gas retains not less than 80% of its tensile strength, flexural modulus, and Izod impact strength.

3. The article according to claim 2, characterised by that more than 85% of the tensile strength, flexural modulus, and Izod impact strength are retained after exposure to up to 5 MRADS of gamma radiation or said sterilizing agent.

4. The article according to claim 3, characterised by that in said sterilizing agent said diluent is a halocarbon.

5. The article according to claim 4, characterised by that in said polymer alloy said ductile and said rubbery polymers are miscible.

6. The article according to claim 5, characterised by that in said polymer alloy said brittle polymer is selected from polymers comprising;
(i) from 90 to 30 weight percent of one or more C₈₋₁₂ vinyl aromatic monomers which are unsubstituted or substituted by a C₁₋₄ alkyl radical;
(ii) from 10 to 70 weight percent of one or more C₁₋₆ alkyl esters of C₃₋₆ ethylenically unsaturated carboxylic acids; and
(iii) from 0 to 5 weight percent of one or more C₃₋₆ ethylenically unsaturated carboxylic acids.

7. The article according to claim 6, characterised by that in said brittle polymer in said polymer alloy said C₁₋₆ alkyl ester of a C₃₋₆ ethylenically unsaturated carboxylic acid is selected from methyl methacrylate, ethyl methacrylate, methyl acrylate, ethyl acrylate, butyl acrylate and butyl methacrylate; said C₈₋₁₂ vinyl aromatic monomer is selected from styrene, α-methyl styrene, p-methyl styrene, and t-butyl styrene.

8. The article according to claim 7, characterised by that in said polymer alloy said brittle polymer is present in an amount from 75 to 35 weight percent.

9. The article according to claim 8, characterised by that in said polymer alloy said ductile polymer is selected from linear or radial di- or tri-block copolymers of one or more C₈₋₁₂ vinyl aromatic monomers which are unsubstituted or substituted by a C₁₋₄ alkyl radical and one or more C₄₋₆ conjugated diolefin monomers.

10. The article according to claim 9, characterised by that in said ductile polymer in said polymer alloy said C₈₋₁₂ vinyl aromatic monomer is selected from styrene, α-methyl styrene, p-methyl styrene, and t-butyl styrene, and said conjugated diolefin is selected from butadiene and isoprene.

11. The article according to claim 10, characterised by that in said polymer alloy said ductile polymer is present in an amount from 65 to 25 weight percent.

12. The article according to claim 11, characterised by that in said polymer alloy said rubbery polymer is selected from tapered, linear and radial di- and tri-block copolymers comprising block polymers of one or more C₈₋₁₂ vinyl aromatic monomers which are unsubstituted or substituted by a C₁₋₄ alkyl radical and block polymers of one or more C₄₋₆ conjugated diolefin monomers.

13. The article according to claim 12, characterised by that in said rubbery polymer in said polymer alloy said one or more C₈₋₁₂ vinyl aromatic monomers is selected from styrene, α-methyl styrene, p-methyl styrene, and t-butyl styrene, and said one or more C₄₋₆ conjugated diolefin monomers is selected from butadiene and isoprene.

14. The article according to claim 13, characterised by that in said polymer alloy said rubbery polymer is present in an amount from 5 to 30 weight percent.

15. The article according to claim 14, characterised by that in said polymer alloy said ductile polymer comprises:
(i) from 60 to 90 weight percent of said C₈₋₁₂ vinyl aromatic monomer; and
(ii) from 40 to 10 weight percent of said C₄₋₆ conjugated diolefin.

16. The article according to claim 15, characterised by that in said polymer alloy said rubbery polymer comprises:
(i) from 30 to 70 weight percent of said one or more C₈₋₁₂ vinyl aromatic monomers; and
(ii) from 70 to 30 weight percent of said one or more C₄₋₆ conjugated diolefins.

17. The article according to claim 16, characterised by that in said polymer alloy said brittle polymer forms a continuous phase and said ductile and said rubbery polymers form one or more discontinuous phases.

18. The article according to claim 17, characterised by that in said polymer alloy said ductile polymer comprises:
(i) from 70 to 80 weight percent of at least one of said C₈₋₁₂ vinyl aromatic monomers; and
(ii) from 30 to 20 weight percent of at least one of said C₄₋₆ conjugated diolefin.

19. The article according to claim 18, characterised by that in said polymer alloy said rubbery polymer comprises:
(i) from 40 to 45 weight percent of said one or more C₈₋₁₂ vinyl aromatic monomers; and
(ii) from 60 to 55 weight percent of said one or more C₄₋₆ conjugated diolefins.

20. The article according to claim 19, characterised by that in said polymer alloy said brittle polymer is present in an amount from 45 to 82 weight percent.

21. The article according to claim 20, characterised by that in said polymer alloy said brittle polymer is present in an amount from 55 to 82 weight percent and comprises:
(i) from 80 to 40 weight percent of said one or more C₈₋₁₂ vinyl aromatic monomers;
(ii) from 20 to 60 weight percent of said one or more C₁₋₄ alkyl acrylates or C₁₋₄ alkyl methacrylates; and
(iii) from 0 to 3 weight percent of said one or more C₃₋₆ ethylenically unsaturated carboxylic acids.

22. The article according to claim 21, characterised by that in said polymer alloy said brittle polymer is present in an amount from 55 to 82 weight percent and comprises:
(i) from 55 to 75 weight percent of said one or more C₈₋₁₂ vinyl aromatic monomers;
(ii) from 45 to 25 weight percent of said one or more C₁₋₄ alkyl acrylates or C₁₋₄ alkyl methacrylates; and
(iii) from 0 to 3 weight percent of said one or more C₃₋₆ ethylenically unsaturated carboxylic acids.

23. The article according to claim 22, characterised by that in said polymer alloy said brittle polymer is present in an amount from 55 to 82 weight percent and comprises:
(i) from 75 to 65 weight percent of styrene;
(ii) from 25 to 35 weight percent of methyl methacrylate; and
(iii) from 0 to 3 weight percent of one or more C₃₋₆ ethylenically unsaturated carboxylic acids.

24. The article according to claim 21, characterised by that in said polymer alloy the index of refraction of said brittle polymer matches the index of refraction of a blend of said ductile and said rubbery polymers within ±0.01.

25. The article according to claim 22, characterised by that in said polymer alloy the index of refraction of said brittle polymer matches the index of refraction of a blend of said ductile and said rubbery polymers within ± 0.01.

26. The article according to claim 23, characterised by that in said polymer alloy the index of refraction of said brittle polymer matches the index of refraction of a blend of said ductile and said rubbery polymers within ± 0.01.

27. The article according to claim 16, characterised by that in said polymer alloy said ductile and rubbery polymers form a continuous phase and said brittle polymer forms a discontinuous phase.

28. The article according to claim 27, characterised by that in said polymer alloy said ductile polymer comprises:
(i) from 70 to 80 weight percent of said at least one C₈₋₁₂ vinyl aromatic monomers; and
(ii) from 30 to 20 weight percent of said at least one C₄₋₆ conjugated diolefin.

29. The article according to claim 28, characterised by that in said polymer alloy said rubbery polymer comprises:
(i) from 40 to 45 weight percent of said one or more C₈₋₁₂ vinyl aromatic monomers; and
(ii) from 60 to 55 weight percent of said one or more C₄₋₆ conjugated diolefins.

30. The article according to claim 29, characterised by that in said polymer alloy said brittle polymer is present in an amount from 30 to 55 weight percent.

31. The article according to claim 30, characterised by that in said polymer alloy said brittle polymer is present in an amount from 30 to 45 weight percent and comprises:
(i) from 80 to 40 weight percent of said one or more C₈₋₁₂ vinyl aromatic monomers;
(ii) from 20 to 60 weight percent of said one or more C₁₋₄ alkyl acrylates or C₁₋₄ alkyl methacrylates; and
(iii) from 0 to 3 weight percent of said one or more C₃₋₆ ethylenically unsaturated carboxylic acids.

32. The article according to claim 30, characterised by that in said polymer alloy said brittle polymer is present in an amount from 30 to 45 weight percent and comprises:
(i) from 55 to 75 weight percent of said one or more C₈₋₁₂ vinyl aromatic monomers;
(ii) from 45 to 25 weight percent of said one or more C₁₋₄ alkyl acrylates or C₁₋₄ alkyl methacrylates; and
(iii) from 0 to 3 weight percent of said one or more C₃₋₆ ethylenically unsaturated carboxylic acids.

33. The article according to claim 30, characterised by that in said polymer alloy said brittle polymer is present in an amount from 30 to 45 weight percent and comprises:
(i) from 75 to 65 weight percent of styrene;
(ii) from 25 to 35 weight percent of methyl methacrylate; and
(iii) from 0 to 3 weight percent of one or more C₃₋₆ ethylenically unsaturated carboxylic acids.

34. The article according to claim 31, characterised by that in said polymer alloy the index of refraction of said brittle polymer matches the index of refraction of a blend of said ductile and said rubbery polymers within ±0.01.

35. The article according to claim 32, characterised by that in said polymer alloy the index of refraction of said brittle polymer matches the index of refraction of a blend of said ductile and said rubbery polymers within ±0.01.

36. The article according to claim 33, characterised by that in said polymer alloy the index of refraction of said brittle polymer matches the index of refraction of a blend of said ductile and said rubbery polymers within ±0.01.

37. The article according to claim 1, characterised by having been selected from a medical urine meter or collector, a bacterial identification or culture device, a medical assay devices, a make up container and blister or bubble type packaging.

38. The article according to claim 14, characterised by having been selected from a medical urine meter or collector, a bacterial identification or culture device, a medical assay devices, a make up container and blister or bubble type packaging.

39. The article according to claim 17, characterised by having been selected from a medical urine meter or collector, a bacterial identification or culture device, a medical assay devices, a make up container and blister or bubble type packaging.

40. The article according to claim 23, characterised by having been selected from a medical urine meter or collector, a bacterial identification or culture device, a medical assay devices, a make up container and blister or bubble type packaging.

41. The article according to claim 33, characterised by having been selected from a medical urine meter or collector, a bacterial identification or culture device, a medical assay devices, a make up container and blister or bubble type packaging.
